Europäisches Patentamt

European Patent Office

Office européen des brevets

(19)

(11) Veröffentlichungsnummer: **0 040 311**
**B1**

# EUROPÄISCHE PATENTSCHRIFT

(12)

(45) Veröffentlichungstag der Patentschrift:
**02.11.83**

(51) Int. Cl.³: **H 01 M 2/12**

(21) Anmeldenummer: **81102593.1**

(22) Anmeldetag: **07.04.81**

(54) **Verschlussstopfen für Akkumulatorenzellen.**

(30) Priorität: **19.04.80 DE 8010826 U**

(43) Veröffentlichungstag der Anmeldung:
**25.11.81 Patentblatt 81/47**

(45) Bekanntmachung des Hinweises auf die Patenterteilung:
**02.11.83 Patentblatt 83/44**

(84) Benannte Vertragsstaaten:
**AT DE FR GB IT SE**

(56) Entgegenhaltungen:
**DE - B - 1 196 258**
**DE - U - 7 706 828**
**FR - A - 2 151 664**
**GB - A - 1 200 173**

(73) Patentinhaber: **VARTA Batterie Aktiengesellschaft, Am Leineufer 51, D-3000 Hannover 21 (DE)**

(72) Erfinder: **Maischatz, Günther, Enneper Strasse 75, D-5800 Hagen 7 (DE)**
Erfinder: **Franke, Hermann, Wuppermannstrasse 77, Ennepetal (DE)**

(74) Vertreter: **Kaiser, Dieter Ralf, Dipl.-Ing., Gundelhardtstrasse 72, D-6233 Kelkheim/Ts. (DE)**

## Verschlussstopfen für Akkumulatorenzellen

Die Neuerung betrifft einen Verschlussstopfen für Akkumulatorenzellen, der in die Einfüllöffnung der Zelle eingeschraubt oder eingerenkt ist.

Verschlussstopfen der hier in Betracht kommenden Gattung sind in mannigfachen Ausführungsformen bekannt. Die Zellenverschlüsse werden benötigt, um die Einfüllöffnung nach jeder Elektrolytzugabe wieder abzudichten oder auch, um eine notwendige, dauernde oder vorübergehende Verbindung zwischen dem Zellinnern und der äusseren Umgebung herzustellen. So muss das Zellinnere beispielsweise für Diagnosezwecke zugänglich sein, was das Vorhandensein einer verschliessbaren Öffnung zum Einführen von Diagnoseschläuchen, Thermometer usw. erfordert. Die sich im Innern der Zelle sammelnden Elektrolysegase verlangen ein Ventil zum Entweichen. Da die Gase in der Regel winzige Säure- oder Laugetröpfchen als Aerosol mit sich führen, ist ein Gastrocknerstopfen dort angebracht, wo sich in der Umgebung der Akkumulatorzelle besonders korrosionsanfällige Gegenstände befinden. Als Voraussetzung für einen geringen Wartungsaufwand muss der Zellenverschluss mit einer Rekombinationsvorrichtung versehen sein, die Explosionssicherheit verlangt die zusätzliche Einrichtung einer Zünddurchschlagsperre usw.

Um allen Erfordernissen gerecht zu werden, bedarf es im Grunde einer Vielzahl von Verschlussstopfen, die in Gestalt und Funktion dem jeweiligen speziellen Zweck angepasst sind.

Für die Praxis bedeutet die Vielfalt dieser Stopfen keinen Vorteil, da sie den Umfang der kompletten Batterieausrüstung in unerwünschter Weise vergrössern, wenn für jeden Anwendungsfall ein eigens dazu vorgesehener Stopfen auf Vorrat gehalten werden muss.

Der Neuerung liegt daher die Aufgabe zugrunde, die Vielfalt der Verschlussstopfen auf möglichst eine Grundform mit nur wenigen Teilen zu reduzieren und damit eine Anordnung zu erhalten, die vielseitig einsetzbar ist.

Die Aufgabe wird gemäss der Neuerung dadurch gelöst, dass sie aus einem nach oben leicht konisch auslaufenden Hohlzylinder mit einem angespritzten Teller und Gewindeteil besteht, welcher durch eine Kappe verschliessbar ist, dass der Hohlzylinder an seiner Aussenseite eine Schnappkante besitzt und dass der Hohlzylinder an seinem oberen Rand innenseitig eine umlaufende Dichtlippe besitzt.

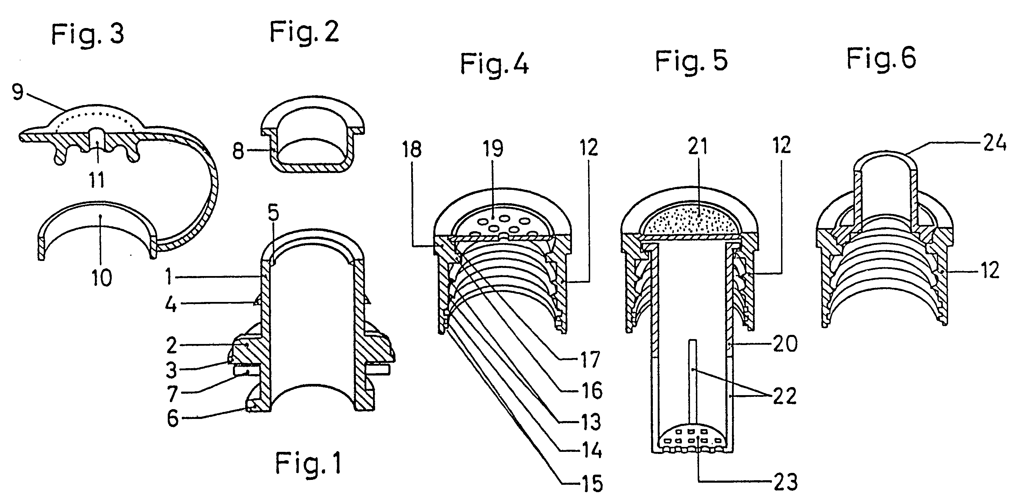

Anhand der Fig. 1 bis 6 wird der neuerungsgemässe Verschlussstopfen im einzeln erläutert.

Fig. 1 zeigt die zylindrische Grundform 1, ausgestattet mit einem an das Gehäuse mit Versteifungsrippen 2 angespritzten Teller 3, einer Schnappkante 4 an der Aussenwand des Zylinders, einer Dichtlippe 5 in der oberen Zylinderöffnung und einem Gewindeteil 6, das hier als Renkverschluss ausgebildet ist. Das Zylinderteil ist nach oben leicht konisch verjüngt. Ein Gummiring 7 dichtet gegen den Zellendeckel ab.

Fig. 2 zeigt eine becherförmige Verschlusskappe 8, die gegen den Widerstand der Dichtlippe 5 in das Gehäuse der Grundform 1 eingedrückt werden kann. Für den blossen Transport von Batterien genügt diese Kombination als Stopfen.

Fig. 3 zeigt eine andere eindrückbare Verschlusskappe 9, die mittels einer Lasche 10 an der Grundform 1 unterhalb der Schnappkante 4 befestigt werden kann und die Grundform wegen der vorhandenen entgasungsöffnung 11 bereits zu einem funktionsfähigen Betriebsstopfen ergänzt.

Fig. 4 zeigt eine weitere, besonders vorteilhafte Kappe 12 für die Grundform 1, indem sie auf diese mit Passitz aufgeschoben, andererseits aber nur durch eine Rechtsdrehung von der Grundform wieder gelöst werden kann und als Adapter die Aufnahme zusätzlicher Bauteile ermöglicht. Die Kappe 12 verdankt diese vorteilhaften Eigenschaften einer besonderen Profilierung ihres ringzylindrischen Gehäuses. Diese Profilierung wird von den umlaufenden Dichtlippen 13, einer zum unteren Gehäuseende in ein 2gängiges Gewinde 15 auslaufende Schnappkante 14, einem Innenbund 16 und einer Fixierrille 17 am oberen Gehäuseende gebildet. Zur besseren Griffigkeit ist der obere Aussenrand 18 mit einer Riffelung versehen.

Im aufgeschobenen Zustand sitzt die Kappe 12 mit dem Innenbund 16 auf dem oberen Rand der Grundform 1 auf und ist durch die Dichtlippen 13 gegen den Aussenmantel, an dem sich die Schnappkante 4 befindet, so gut abgedichtet, dass Elektrolysegase und Elektrolytpartikel nur durch den ein drückbaren, perforierten Deckel 19, entweichen können. Fig. 1 und 4 geben so in Kombination wiederum einen normalen Betriebsstopfen wieder.

Fig. 5 zeigt die Kappe 12 mit einem Korbeinsatz 20 und einer Verdeckelung durch eine poröse Platte 21 anstelle des Deckels 19, beispielsweise einer sinterporösen Metallscheibe. Die Gleichheit der Innendurchmesser des Bundes 16 und der Grundform 1 macht es möglich, den Korbeinsatz 20 in die Teilekombination exakt aufzunehmen und gleichzeitig abzudichten. Mit Schlitzen 22 und einem gelochten Boden 23 versehen, kann er beispielsweise mit einem granulierten Trockenmittel gefüllt sein. Die Anordnung der Fig. 5 ergibt so in Kombination mit der Grundform 1 (Fig. 1) einen – wegen der sinterporösen Metallscheibe 21 explosionsgesicherten – Gastrocknerstopfen.

Fig. 6 zeigt die Kappe mit einem lösbaren Rohraufsatz 24 als Übergangsteil für weitere, hier nicht dargestellte Bauelemente, beispielsweise einen Rekombinator.

Mit den wiedergegebenen Beispielen ist die Umwandelbarkeit des Verschlussstopfens gemäss Neuerung und seine Anpassungsfähigkeit und die verschiedenen Erfordernisse eines einwandfreien Zellenbetriebes nicht erschöpft. Die Erfassung mehrer Stopfenfunktionen innerhalb einer einheitlichen, raumsparenden Gehäuseform ist ein weiterer Vorteil dieses Zellenverschlusses.

Die Grundform 1 kann bei solchen Zellen sogar entfallen, welche am Zellendeckel einen angespritzten Dom haben, dessen Aussenkontur derjenigen der Grundform entspricht. Es übernimmt dann der Dom die Rolle der Grundform, auf der die Kappe 12 aufgesetzt werden kann.

**Patentansprüche**

1. Verschlussstopfen für Akkumulatorenzellen, der in die Einfüllöffnung der Zelle fest eingeschraubt oder eingerenkt ist, dadurch gekennzeichnet, dass er aus einem nach oben leicht konisch auslaufenden Hohlzylinder (1) mit einem angespritzten Teller (3) und Gewindeteil (6) besteht, welcher durch eine Kappe (8, 9, 12) verschliessbar ist, dass der Hohlzylinder an seiner Aussenseite eine Schnappkante (4) besitzt und dass der Hohlzylinder an seinem oberen Rand innenseitig eine umlaufende Dichtlippe (5) besitzt.

2. Verschlussstopfen nach Anspruch 1, dadurch gekennzeichnet, dass die Kappe ein gegen die Dichtlippe (5) eindrückbarer Becher (8) ist.

3. Verschlussstopfen nach den Ansprüchen 1 und 2, dadurch gekennzeichnet, dass die Kappe (9) am Hohlzylinderteil unterhalb der Schnappkante (4) mittels einer Lasche (10) befestigt ist.

4. Verschlussstopfen nach einem der beiden Ansprüche 2 oder 3, dadurch gekennzeichnet, dass die Kappe (9) eine Entgasungsöffnung (11) besitzt.

5. Verschlussstopfen nach Anspruch 1, dadurch gekennzeichnet, dass die Kappe ein über das Hohlzylinderteil aufschiebbares, ringzylindrisches Gehäuse (12) ist.

6. Verschlussstopfen nach Anspruch 5, dadurch gekennzeichnet, dass die Innenwand des ringzylindrischen Gehäuses zur Abdichtung gegen das Hohlzylinderteil umlaufende Dichtlippen (13) besitzt und dass ihr unterhalb der Dichtlippen eine Schnappkante (14) mit gewindeförmigem Auslauf (15) ausgeformt ist.

7. Verschlussstopfen nach den Ansprüchen 5 und 6, dadurch gekennzeichnet, dass das ringzylindrische Gehäuse einen Korbeinsatz (20) besitzt.

8. Verschlussstopfen nach einem der Ansprüche 5 bis 7, dadurch gekennzeichnet, dass das ringzylindrische Gehäuse mit einem eindrückbaren perforierten Deckel (19) versehen ist.

9. Verschlussstopfen nach einem der Ansprüche 5 bis 7, dadurch gekennzeichnet, dass das ringzylindrische Gehäuse mit einer eindrückbaren porösen Platte (21) versehen ist.

10. Verschlussstopfen nach den Ansprüchen 5 und 6, dadurch gekennzeichnet, dass das ringzylindrische Gehäuse mit einem Rohraufsatz (24) versehen ist.

**Revendications**

1. Bouchon de fermeture pour éléments d'accumulateurs, qui est vissé ou emboîté dans l'orifice de remplissage de l'élément, bouchon caractérisé en ce qu'il est constitué d'un cylindre creux (1) se terminant vers le haut de façon légèrement conique avec une collerette (3) moulée par injection et une partie de filetage (6) et qui est susceptible d'être fermé par un capot, ce cylindre creux comportant, sur sa face externe, une arête d'enclenchement (4) et, à son bord supérieur, sur sa face interne, une lèvre d'étanchement périphérique (5).

2. Bouchon de fermeture selon la revendication 1, caractérisé en ce que le capot est un godet (8) susceptible d'être mis en place par enfoncement contre la lèvre d'étanchement (5).

3. Bouchon de fermeture selon les revendications 1 et 2, caractérisé en ce que le capot (9) est fixé sur la partie cylindrique creuse au-dessous de l'arête d'enclenchement (4) au moyen d'une patte (10).

4. Bouchon de fermeture selon l'une des revendications 2 ou 3, caractérisé en ce que le capot (9) comporte un orifice de dégazage (11).

5. Bouchon de fermeture selon la revendication 1, caractérisé en ce que le capot est une enveloppe (12) de forme cylindrique annulaire susceptible d'être enfilée par-dessus la partie cylindrique creuse.

6. Bouchon de fermeture selon la revendication 5, caractérisé en ce que la paroi interne de l'enveloppe cylindrique annulaire comporte, pour l'étanchement par rapport à la partie cylindrique creuse, des lèvres d'étanchement périphériques (13) et en ce qu'une nervure d'enclenchement (14) se terminant sous forme de filetage (15) est formée sur elles au-dessous des lèvres d'étanchement.

7. Bouchon de fermeture selon les revendications 5 et 6, caractérisé en ce que l'enveloppe cylindrique annulaire comporte une garniture (20) formant panier.

8. Bouchon de fermeture selon l'une des revendications 5 à 7, caractérisé en ce que l'enveloppe cylindrique annulaire est munie d'un couvercle perforé (19) susceptible d'être mis en place par enfoncement.

9. Bouchon de fermeture selon des revendications 5 à 7, caractérisé en ce que l'enveloppe cylindrique annulaire est munie d'une plaque poreuse (21) susceptible d'être mise en place par enfoncement.

10. Bouchon de fermeture selon les revendications 5 et 6, caractérisé en ce que l'enveloppe cylindrique annulaire est munie d'un appendice tubulaire (24).

**Claims**

1. A closure plug for storage-battery cells, which is screwed or twisted firmly into the filling opening of the cell, characterized in that it comprises a hollow cylinder (1) extending slightly conically upwards with a disc (3) and a threaded portion (6) injection-moulded thereon, which may be closed by a cap (8, 9, 12), the outside of the hollow cylinder is provided with a snap edge (4) and the inside of the upper edge of the hollow cylinder is provided with a continuous sealing lip (5).

2. A closure plug according to claim 1, characterized in that the cap is a cup (8) which may be pushed in against the sealing lip (5).

3. A closure plug according to claims 1 and 2, characterized in that the cap (9) is secured to the hollow cylindrical portion beneath the snap edge (4) by means of a strap (10).

4. A closure plug according to claim 2 or 3, characterized in that the cap (9) has a vent opening (11).

5. A closure plug according to claim 1, characterized in that the cap is an annular cylindrical casing (12) which may be pressed over the hollow cylindrical portion.

6. A closure plug according to claim 5, characterized in that the inner wall of the annular cylindrical casing is provided with continuous sealing lips (13) towards the hollow cylindrical portion and a snap edge (14) with a helical termination (15) is formed thereon beneath the sealing lips.

7. A closure plug according to claims 5 and 6, characterized in that the annular cylindrical casing has a cage insert (20).

8. A closure plug according to any one of claims 5 to 7, characterized in that the annular cylindrical casing is provided with a perforated lid (19) which may be pushed in.

9. A closure plug according to any one of claims 5 to 7, characterized in that the annular cylindrical casing is provided with a porous plate (21) which may be pushed in.

10. A closure plug according to claims 5 and 6, characterized in that the annular cylindrical casing is provided with a pipe connection (24).

Fig. 3  Fig. 2  Fig. 4  Fig. 5  Fig. 6

9

8

18  19  12

21  12

24

11

10

5

1

4

2

3

7

6

17

16

13

14

15

20

22

23

12

Fig. 1

0 040 311